# EUROPEAN PATENT SPECIFICATION

(11) **EP 3 854 190 B1**
(45) Date of publication and mention of the grant of the patent: **08.11.2023**
(21) Application number: 21153030.8
(22) Date of filing: 22.01.2021
(51) Int. Cl.: A01B 47/00

(54) **SYSTEMS AND METHODS FOR MONITORING TILLAGE CONDITIONS**
SYSTEME UND VERFAHREN ZUR ÜBERWACHUNG VON BODENBEARBEITUNGSBEDINGUNGEN
SYSTÈMES ET PROCÉDÉS POUR SURVEILLER DES CONDITIONS DE TRAVAIL DU SOL

(30) Priority: 23.01.2020 US 202062964967 P
(43) Date of publication of application: 28.07.2021
(73) Proprietor: CNH Industrial Belgium N.V., 8210 Zedelgem (BE)
(72) Inventor: Henry, James W., Saskatoon, Saskatchewan SK S7K 6E2 (CA); Whittome, Samuel, Cambridge, CB1 9GQ (GB); Kimpton, Laura, Baldock, SG7 6NF (GB); Jones, Ross, Cambridge, CB1 8QH (GB)
(74) Representative: CNH Industrial IP Department

(56) References cited:
- WO-A1-2016/182906
- WO-A1-2017/197274
- WO-A1-2021/021508
- US-A1- 2018 279 543
- US-B1- 8 849 523

## Description

### FIELD OF THE INVENTION

The present disclosure relates generally to systems and methods for monitoring tillage conditions and, more particularly, to systems for monitoring tillage conditions as an agricultural implement moves across a field.

### BACKGROUND OF THE INVENTION

It is well known that, to attain the best agricultural performance from a field, a farmer must cultivate the soil, typically through a tillage operation. Tillage implements typically include a plurality of ground engaging tools configured to engage the soil as the implement is moved across the field. Such ground engaging tool(s) loosen and/or otherwise agitate the soil up to a certain depth in the field to prepare the field for subsequent agricultural operations, such as planting operations.

When performing a tillage operation, it is desirable to create a level and uniform layer of tilled soil across the field to form a proper seedbed in subsequent planting operations. However, due to varying soil conditions across the field, implement settings, and/or other factors, tillage conditions such as the levelness of the tillage floor, compaction, water content, and/or the like of the tillage layer may be impacted significantly. Poor tillage conditions can result in losses in crop yield. For example, poor tillage floor levelness may cause seed skips during the planting operation.

Accordingly, systems and methods for monitoring tillage conditions as an agricultural implement is moved across a field would be welcomed in the technology.

Patent publication document US2018/279543 is related to a system for monitoring a tillage floor behind a tillage implement that is pulled through a field. The system comprises pivot arms and wheels configured to roll on the tillage floor, thereby following the level of said tillage floor. A sensor detects the movement of the pivot arms relative to an arm segment. A controller translates said movement into a signal that represents the tillage floor profile in the direction of travel of the implement.

Patent publication document WO2016/182906 is related to a soil imaging system having a work layer sensor disposed on an agricultural implement to generate an electromagnetic field through a soil area of interest as the agricultural implement traverses a field. A monitor in communication with the work layer sensor is adapted to generate a work layer image of the soil layer of interest based on the generated electromagnetic field. The work layer sensor may also generate a reference image by generating an electromagnetic field through undisturbed soil. The monitor may compare at least one characteristic of the reference image with at least one characteristic of the work layer image to generate a characterized image of the work layer of interest. The monitor may display operator feedback and may effect operational control of the agricultural implement based on the characterized image.

Patent publication document WO2017/197274 discloses a trench closing sensor adapted to mount to an agricultural implement to detect whether a seed trench is sufficiently closed with soil to ensure good seed to soil contact. The trench closing sensor may also detect the amount of compaction of the soil over the seed within the seed trench.

### BRIEF DESCRIPTION OF THE INVENTION

Aspects and advantages of the invention will be set forth in part in the following description, or may be obvious from the description, or may be learned through practice of the invention.

In one aspect, the present subject matter is directed to a system for monitoring tillage conditions of a field. The system includes an agricultural implement, a tillage sensor, and a controller. The tillage sensor is supported on the agricultural implement such that the tillage sensor has a field of view directed towards a portion of the field disposed relative to the agricultural implement. The tillage sensor is configured to generate data indicative of a tillage floor levelness associated with a tillage floor of a tillage layer of the field, where the tillage floor is disposed below a surface of the field. The controller is configured to receive the data from the tillage sensor indicative of the tillage floor levelness as the agricultural implement moves across the field. The controller is additionally configured to monitor the tillage floor levelness based at least in part on the data received from the tillage sensor.

In further aspect, the present subject matter is directed to a system for monitoring tillage conditions of a field. The system includes a tillage sensor supported on an agricultural implement such that the tillage sensor has a field of view directed towards a portion of the field disposed relative to the agricultural implement. The tillage sensor is configured to generate data indicative of a tillage condition associated with a tillage floor of a tillage layer of the field, where the tillage floor is disposed below a surface of the field. The system further includes an actuator configured to actuate the tillage sensor back and forth relative to an adjacent portion of the agricultural implement along a sensor movement path. Additionally, the system includes a controller. The controller is configured to receive the data from the tillage sensor indicative of the tillage condition as the actuator actuates the tillage sensor back and forth along the sensor movement path such that the field of view of the tillage sensor is oscillated relative to the tillage layer while the agricultural implement is being moved across the field. The controller is further configured to monitor the tillage condition based at least in part on the data received from the tillage sensor.

In an additional aspect, the present subject matter is directed to a method for monitoring tillage conditions of a field in accordance with the appended claims. The method includes receiving, with a computing device, data from a tillage sensor indicative of a tillage floor levelness associated with a tillage floor of a tillage layer of a field as an agricultural implement moves across the field, where the tillage floor is disposed below a surface of the field. The method further includes monitoring, with the computing device, the tillage floor levelness based at least in part on the data received from the tillage sensor. Additionally, the method includes performing, with the computing device, a control action based on the monitored tillage floor levelness.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of an agricultural implement coupled to a work vehicle in accordance with aspects of the present subject matter;
FIG. 2 illustrates another perspective view the agricultural implement shown in FIG. 1 in accordance with aspects of the present subject matter;
FIG. 3 illustrates a schematic, top down view of one embodiment of a sensing assembly for monitoring tillage conditions provided in operative association with the agricultural implement shown in FIGS. 1 and 2 in accordance with aspects of the present subject matter;
FIG. 4 illustrates one embodiment of a sensor movement path of the sensing assembly shown in FIG. 3 in accordance with aspects of the present subject matter;
FIG. 5 illustrates another embodiment of a sensor movement path of the sensing assembly shown in FIG. 3 in accordance with aspects of the present subject matter;
FIG. 6 illustrates an example view of an aft end of the implement shown in FIG. 3 and an adjacent portion of a field in accordance with aspects of the present subject matter;
FIG. 7 illustrates a schematic view of a system for monitoring tillage conditions in accordance with aspects of the present subject matter;
FIG. 8A illustrates an example embodiment of a depth map generated from data collected by a sensing assembly for monitoring tillage conditions, particularly illustrating an example of an acceptable tillage floor profile in accordance with aspects of the present subject matter;
FIG. 8B illustrates an example embodiment of a Fourier intensity chart corresponding to the depth map in FIG. 8A in accordance with aspects of the present subject matter;
FIG. 9A illustrates an example embodiment of a depth map generated from data collected by a sensing assembly for monitoring tillage conditions, particularly illustrating an example of an undesirable tillage floor profile in accordance with aspects of the present subject matter;
FIG. 9B illustrates an example embodiment of a Fourier intensity chart corresponding to the depth map in FIG. 9A in accordance with aspects of the present subject matter; and
FIG. 10 illustrates a flow diagram of one embodiment of a method for monitoring tillage conditions in accordance with aspects of the present subject matter.

Repeat use of reference characters in the present specification and drawings is intended to represent the same or analogous features or elements of the present technology.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to systems and methods for monitoring tillage conditions of a field as an agricultural implement moves across the field. Specifically, in accordance with aspects of the present subject matter, the disclosed system may include a ground penetrating radar supported relative to an agricultural implement such that the ground penetrating radar is configured to generate data indicative of tillage conditions of a tillage layer formed by the agricultural implement as the implement moves across a field. The tillage layer extends below a surface of the field, with the ground penetrating radar being able to detect the tillage conditions without contacting the tillage floor or, in some embodiments, the field surface. A computing device or controller of the disclosed system may be configured to monitor the tillage conditions based on the data received from the ground penetrating radar. For instance, the data generated by the ground penetrating radar may be indicative of the levelness of the tillage floor, compaction, water content, and/or the like of the tillage layer. Additionally, the system controller may be configured to perform a control action based on the monitored tillage conditions. For instance, the controller may be configured to adjust the operation of one or more implement actuators to level the implement and/or notify an operator of the monitored tillage conditions.

Moreover, in some embodiments, a field of view of the ground penetrating radar may only cover a portion of the tillage layer across a swath of the field. As such, the controller of the disclosed system may be configured to actuate the ground penetrating radar back and forth along a sensor movement path such that the field of view of the ground penetrating radar is oscillated across an adjacent portion of the field. Thus, the ground penetrating radar may capture data associated with the monitored tillage conditions across a wider portion of the tillage layer than if the ground penetrating radar were fixed in position.

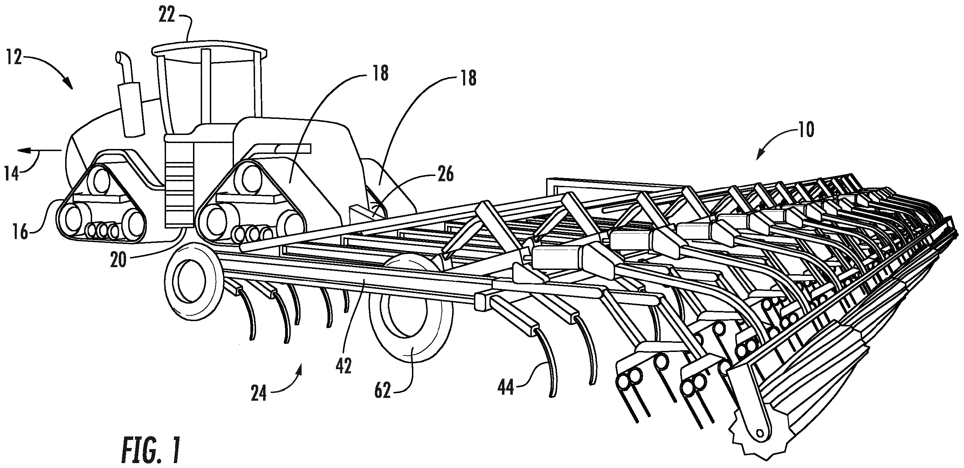

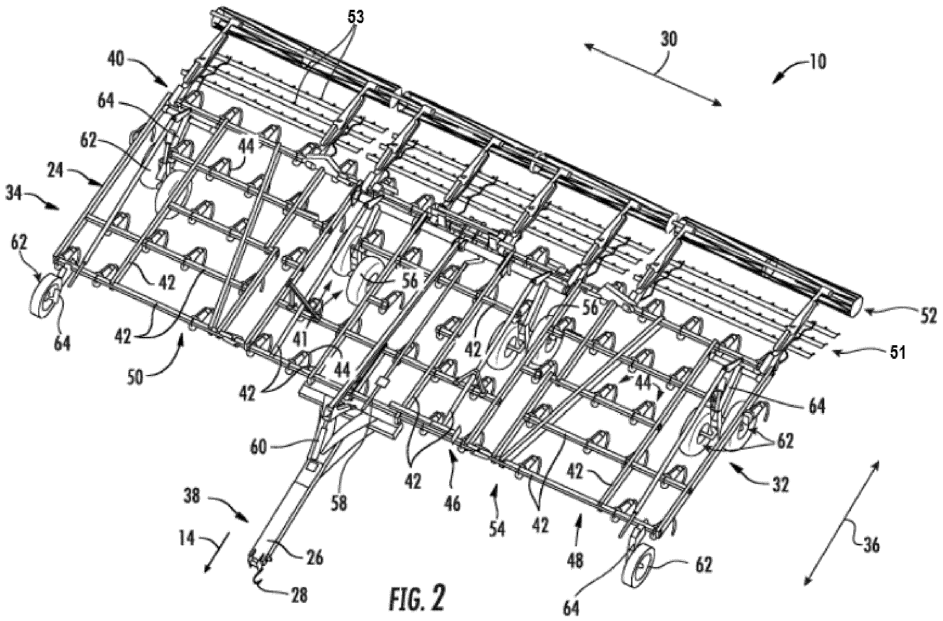

Referring now to the drawings, FIGS. 1 and 2 illustrate differing perspective views of one embodiment of an agricultural tillage implement in accordance with aspects of the present subject matter. Specifically, FIG. 1 illustrates a perspective view of the agricultural implement 10 coupled to a work vehicle 12. Additionally, FIG. 2 illustrates a perspective view of the agricultural implement 10, particularly illustrating various components of the implement 10. Although described below with reference to a tillage implement, it should be understood that the implement 10 may be any suitable type of agricultural implement.

As shown in FIG. 1, the work vehicle 12 includes a pair of front track assemblies 16, a pair of rear track assemblies 18, and a frame or chassis 20 coupled to and supported by the track assemblies 16, 18. An operator's cab 22 may be supported by a portion of the chassis 20 and may house various input devices for permitting an operator to control the operation of one or more components of the work vehicle 12 and/or one or more components of the implement 10. Additionally, as is generally understood, the work vehicle 12 may include an engine (not shown) and a transmission (not shown) mounted on the chassis 20. The transmission may be operably coupled to the engine and may provide variably adjusted gear ratios for transferring engine power to the track assemblies 16, 18 via a drive axle assembly (not shown) (or via axles if multiple drive axles are employed).

In general, the implement 10 may generally include a frame assembly 24 configured to be towed across a field in a direction of travel (e.g., as indicated by arrow 14 in FIG. 1) by the work vehicle 12 via a tow bar 26. For instance, the implement 10 may include a hitch assembly 28 (FIG. 2) coupled to the tow bar 26 that allows the implement 10 to be coupled to the work vehicle 12. As shown in FIG. 2, the frame assembly 24 of the implement 10 may generally extend along a lateral direction (e.g., as indicated by arrow 30) between a first lateral side 32 and a second lateral side 34. The frame assembly 24 may further extend along a longitudinal direction (e.g., as indicated by the arrow 36), generally parallel to the direction of travel 14 between a forward end 38 and an aft end 40. The frame assembly 24 may generally include a plurality of structural frame members 42, such as beams, bars, and/or the like, configured to support or couple to a plurality of components, such as ground-engaging elements 44.

In several embodiments, the frame assembly 24 may include one or more frame sections. As illustrated in FIG. 2, for example, the frame assembly 24 may include a central frame section 46 positioned between the first and second lateral sides 32, 34 of the frame assembly 24. Moreover, the frame assembly 24 may also include a first wing section 48 positioned proximate to the first lateral side 32 of the frame assembly 24 and a second wing section 50 positioned proximate to the second lateral side 34 of the frame assembly 24. The first and second wing sections 48, 50 may generally be disposed along opposite lateral sides of the central frame section 46 and pivotally coupled to the central frame section 46 to allow the wing sections 48, 50 to be folded between their work position to their compact transport position. It should be appreciated that the frame assembly 24 may include any other suitable number of frame sections, such as by including two or more wing sections along each lateral side of the central frame section 46.

In one embodiment, the frame assembly 24 may be configured to support a cultivator 54, which may be configured to till or otherwise break the soil over which the implement 10 travels to create a tillage layer. Specifically, the cultivator 54 may include a plurality of the ground-engaging tools 44, such as shanks, which are pulled through the soil as the implement 10 moves across the field in the direction of travel 14. As shown, the shanks 44 may be arranged so as to be spaced apart from one another across the implement 10. For example, at least some of the shanks 44 may be spaced apart from one another along the longitudinal direction 36 of the implement 10 between the forward and aft ends 38, 40 of the frame assembly 24. Similarly, at least some of the shanks 44 may be spaced apart from one another along the lateral direction 30 of the implement 10 between the first and second sides 32, 34 of the frame assembly 24. In this regard, each frame section 46, 48, 50 of the frame assembly 24 may be configured to support at least one of the shanks 44. For instance, one or more of the shanks 44 may be coupled to or supported by the main frame section 46 and/or while one or more other shanks 44 may be supported by each of the wing frame sections 48, 50 of the frame assembly 24.

Moreover, as shown in FIGS. 1 and 2, the implement 10 may also include one or more other ground engaging tools. For instance, in one embodiment, the implement 10 may also include one or more harrows 51. As is generally understood, the harrows 51 may be configured to be pivotally coupled to the frame 20. The harrows 51 may include a plurality of ground engaging tools 53, such as tines or spikes, which are configured to level or otherwise flatten any windrows or ridges in the soil surface created by the cultivator 54. Additionally, in one embodiment, the implement 10 may optionally include one or more baskets or rotary firming wheels 52. As is generally understood, the baskets 52 may be configured to reduce the number of clods in the soil and/or firm the soil over which the implement 10 travels. As shown, each basket 52 may be configured to be pivotally coupled to one of the harrows 51. Alternately, the baskets 52 may be configured to be pivotally coupled to the frame 20 or any other suitable location of the implement 10.

The implement 10 may further include a plurality of actuators configured to adjust the positions of the implement 10 and/or various ground engaging tools coupled thereto. For example, in some embodiments, a central wheel assembly 56 is disposed below and coupled to the central frame section 46 to support the central frame section 46 relative to the ground and to facilitate towing of the implement 10 in the direction of travel 14. As is generally understood, the central wheel assembly 56 may include at least one lift actuator 58 (e.g., a hydraulic cylinder) configured to extend and retract the wheel assembly 56 relative to the ground. For example, the lift actuator 58 may be configured to retract the central wheel assembly 56 relative to the ground when moving the implement 10 to its ground engaging or work position (e.g., as shown in FIG. 2). Additionally, the lift actuator 58 may be configured to extend the wheel assembly 56 towards the ground when moving the implement 10 to its compact transport position (not shown). Further, as shown in FIG. 2, the central frame section 46 may include a leveling actuator 60 (e.g., a hydraulic cylinder) to perform fore-to-aft leveling operations separately from, or in addition to, the wheel assembly 56.

As shown in FIG. 2, each wing section 48, 50 may also include one or more wing wheel assemblies 62 to facilitate lifting the wing sections 48, 50 relative to the ground. For example, the wing wheel assemblies 62 may be configured to be retracted to lower the wing sections 48, 50 to the work position. Similarly, the wing wheel assemblies 62 may be configured to be extended in an opposite extension direction to move the wing sections 48, 50 from the work position to a raised transport position. It should be appreciated that the extension and retraction of the wing wheel assemblies 62 may be controlled, for example using suitable wing wheel actuators 64 (e.g., hydraulic cylinders). The wing wheel actuators 64 may be configured to be controlled separately from the lift actuator 58 of the central frame section 46, such that the frame sections 46, 48, 50 may be leveled in the lateral direction 30 and/or the longitudinal direction 36.

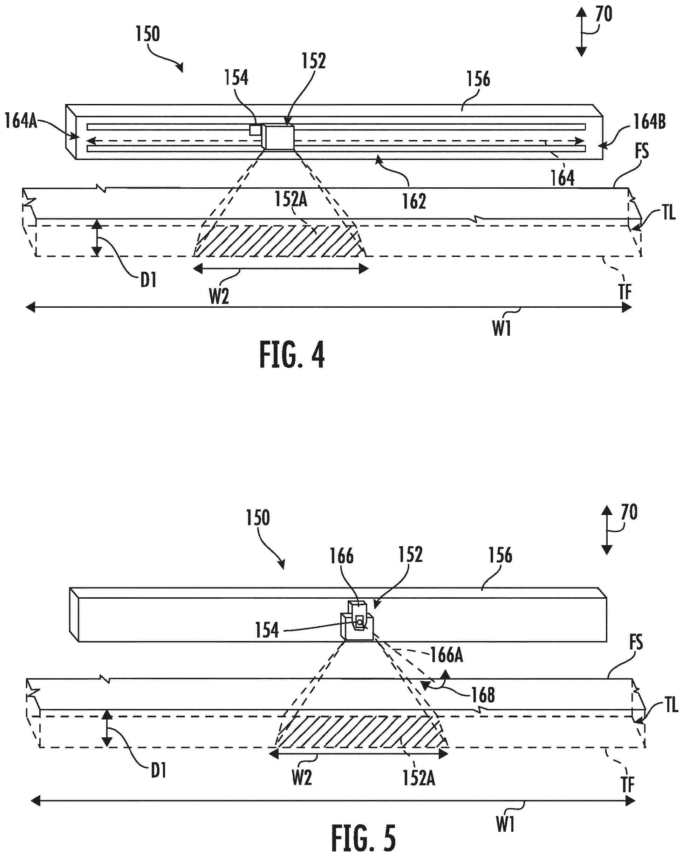

As the implement 10 moves across the field during the performance of a tillage operation, the tools (e.g., shanks 44) of the implement 10 work the field to create a tillage layer having a tillage floor vertically below the field surface. For instance, as shown in FIGS. 4 and 5, the tillage floor TF of the tillage layer TL is at a depth D1 vertically below the field surface FS along a vertical direction (e.g., as indicated by arrow 70 in FIGS. 4 and 5), which is perpendicular to the lateral and longitudinal directions 30, 36 (FIG. 2). The depth D1 may be selected depending on seed type, soil type, and/or the like for subsequent planting operations, where a seedbed is formed relative to the tillage layer TL (e.g., above, at, or below the tillage floor TF). The more uniform the tillage layer TL, the greater the likelihood of a uniform seedbed, which improves potential yield.

In some embodiments, the tillage layer TL is generally formed with the ground engaging tools 44 parallel to the direction of travel 14 of the implement 10 such that the tillage layer TL is also parallel to the direction of travel 14. However, in other embodiments, the tillage layer TL may be formed at an angle relative to the direction of travel 14. As will be described in greater detail below, the tillage conditions of the tillage layer TL formed by the implement 10 may be monitored and the implement 10 may be adjusted depending on the monitored tillage conditions to improve the tillage layer TL for subsequent operations.

It should be appreciated that the configuration of the implement 10 and work vehicle 12 described above are provided only to place the present subject matter in an exemplary field of use. Thus, it should be appreciated that the present subject matter may be readily adaptable to any manner of implement or work vehicle configurations.

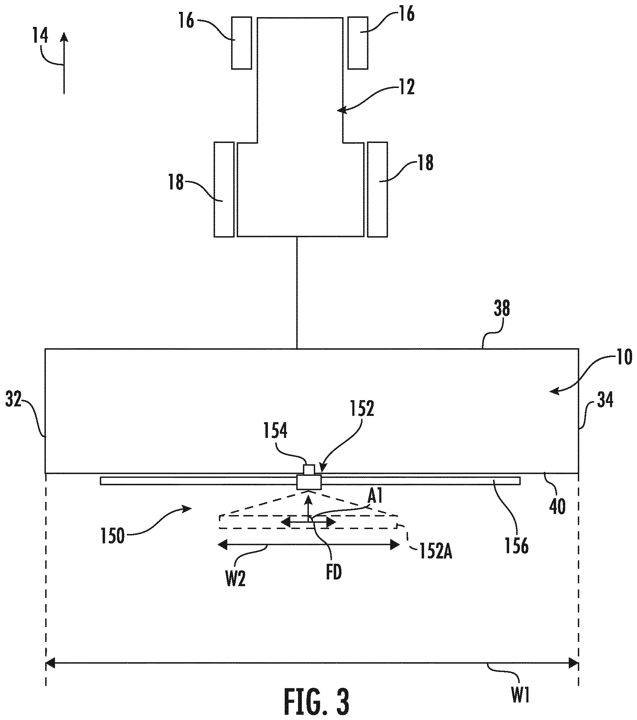

Referring now to FIGS. 3, a schematic, top-down view of a sensing assembly 150 provided in operative association with the implement 10 for monitoring tillage conditions as the implement 10 is moved across the field is illustrated in accordance with aspects of the present subject matter. As shown in FIG. 3, in several embodiments, the sensing assembly 150 may be supported on and/or relative to the implement 10 by a support arm 156. It should be appreciated that the support arm 156 may be one of the frame members 38, 48 of the implement 10 described above, or may be a separate member coupled to the frame 24 of the implement 10. The sensing assembly 150 may generally include a tillage sensor 152, with the tillage sensor 152 being directed towards a tillage layer of the field to generate data indicative of the tillage condition(s) of the tillage layer. For instance, the tillage sensor 152 may be configured to generate data indicative of the levelness of the tillage floor, the compaction of the tillage layer, the moisture content of the tillage layer, and/or the like.

More particularly, the tillage sensor 152 may be supported relative to the implement 10 such that a field of view 152A of the tillage sensor 152 is directed towards the tillage layer formed by the implement 10. For instance, as shown in FIG. 3, the field of view 152A of the tillage sensor 152 may be directed towards a tillage layer within an aft portion of the field disposed rearward of the implement 10 relative to the direction of travel 14. As such, in the embodiment shown, the support arm 156 is positioned at or adjacent to the aft end 40 of the implement 10 such that the tillage sensor 152 may be configured to generate data indicative of tillage conditions associated with the tillage layer aft of the implement 10 as the implement 10 moves across the field. However, it should be appreciated that the tillage sensor 152 may be directed towards any other portion of the tillage layer formed within the field by the implement 10, such as a portion of the tillage layer formed in a previous swath of the field. In such embodiments, the sensing assembly 150 may alternatively or additionally be positioned along one or both of the lateral sides 26, 28 of the implement 10.

The tillage sensor 152 may be configured to generate data indicative of the monitored tillage condition(s) without contacting the tillage layer. For instance, in one embodiment, the tillage sensor 152 is configured as a ground penetrating radar (GPR). However, in other embodiments, the tillage sensor 152 may comprise any other suitable device or combination of devices to generate data indicative of the monitored tillage conditions. In non-contact embodiments, the tillage sensor 152 may be spaced vertically apart from the tillage floor TF of the field as shown in FIGS. 4 and 5. Further, in some embodiments, the tillage sensor 152 may be spaced apart from the surface of the field. For instance, as shown in FIGS. 4 and 5, the tillage sensor 152 may be spaced vertically apart from the surface of the field FS. However, in other embodiments, the tillage sensor 152 may have one or more parts, such as a wheel(s) (not shown) configured to ride along the surface of the field.

In embodiments where the tillage sensor 152 comprises a ground penetrating radar or another similar device, the tillage sensor 152 may be configured to generate a polarized field comprised of polarized electromagnetic waves within the field of view 152A of the tillage sensor 152. The polarized field may penetrate the field surface to reach the tillage floor without requiring the sensing assembly 150 to contact the field. As will be described below in greater detail, the reflection of waves within the polarized field may be used to detect the monitored tillage conditions. In some embodiments, the polarized field is composed of high-frequency waves (e.g., radio waves) that are all oriented along an orientation or field direction FD. In some embodiments, as shown in FIG. 3, the tillage sensor 152 is positioned such that the field direction FD of the polarized waves are oriented at an angle A1 relative to the direction of travel 14 of the implement 10. For example, the angle A1 between the field direction FD of the polarized waves and the direction of travel 14 may be between 0 degrees and 180 degrees. For instance, in one embodiment, the angle A1 between the field direction FD of the polarized waves and the direction of travel 14 may be 45 degrees. Alternatively, in other embodiments, the angle A1 between the field direction FD of the polarized waves and the direction of travel 14 may be 90 degrees, such that the field direction FD is perpendicular to the direction of travel 14.

Moreover, in one embodiment, the field of view 152A of the tillage sensor 152 may be narrower than the implement 10 such that the tillage sensor 152 is only configured to capture data associated with a sub-section of the tillage layer formed aft or behind the implement 10. More particularly, as shown in FIG. 3, the implement 10 has a width W1 extending between its first and second lateral sides 34, 36, which generally corresponds to the width of a swath of the field across which the implement 10 is configured to work the soil during the performance of the associated agricultural operation. In contrast, the field of view 152A of the tillage sensor 152 has a width W2 that is less than the width W1 of the implement 10 or worked field swath. For instance, in the embodiment shown, the width W2 of the field of view 152A corresponds to about one third of the width W 1 of the implement/swath. However, it should be appreciated that, in other embodiments, the width W2 of the field of view 152A may correspond to any other suitable portion of the width W1 of the implement/swath, such as, for example, a quarter of the width W1, a half of the width W 1, and/or the like. Thus, as the implement 10 is moved across the field, the sensor 152 is only configured to capture data associated with a portion of the tillage layer spanning across the width W1 of the implement 10.

Accordingly, as will be described in greater detail below, in some embodiments, the disclosed sensing assembly 150 may also include a sensor actuator 154 provided in operative association with the tillage sensor 152 that is configured to actuate the tillage sensor 152 relative to the implement 10 back and forth along a given sensor movement path such that the field of view 152A of the tillage sensor 152 can be oscillated across all or a given portion of the width W1 of the implement/swath, thereby allowing data to be captured along different sub-sections of the tillage layer formed by the implement 10.

It should be appreciated that, in some embodiments, the width W2 of the field of view 152A of the sensor 152 may correspond to the entire width W1 of the implement/swath such that the sensor 152 may capture data associated with the entire tillage layer associated with the width W1 of the implement/swath. Thus, in some embodiments, the sensor 152 may be fixed relative to the implement 10. It should also be appreciated that, while the sensing assembly 150 is shown as having only one tillage sensor 152, the sensing assembly 150 may have any other suitable number of tillage sensors 152, such as two or more tillage sensors 152. Further, while only one sensing assembly 150 is shown, any other suitable number of sensing assemblies 150 may be provided in association with the implement 10.

Referring now to FIGS. 4 and 5, exemplary embodiments of sensor movement paths along which the tillage sensor(s) 152 of the disclosed sensing assembly 150 may be actuated are illustrated in accordance with aspects of the present subject matter. More particularly, FIG. 4 illustrates a linear sensor movement path along which the tillage sensor(s) 152 may be actuated. Additionally, FIG. 5 illustrates an arced or curved sensor movement path along which the tillage sensor(s) 152 may be actuated.

As shown in FIG. 4, in several embodiments, the tillage sensor 152 may be supported on the implement 10 (e.g., via the support arm 156) such that the tillage sensor 152 is actuatable relative to the support arm 156 and/or the adjacent portion of the implement 10. More particularly, the tillage sensor 152 may be configured to be actuated by the associated sensor actuator 154 relative to the support arm 156 and/or the adjacent portion of the implement 10 along a substantially linear movement path 164 extending between a first end 164A and a second end 164B. As indicated above, the sensor actuator 154 may be configured to move the tillage sensor 152 back and forth along the linear movement path 164 as the implement 10 is moved across the field such that the field of view 152A of the tillage sensor 152 is oscillated across a larger portion of the width W1 of the implement/swath, allowing data to be captured along different sub-sections of the field swath being worked. In some embodiments, the linear movement path 164 is configured such that the tillage sensor 152 may generate data indicative of tillage conditions of the tillage layer(s) created by at least two of the frame sections 46, 48, 50 (FIG. 2). For instance, the tillage sensor 152 may be configured to generate data indicative of the tillage floor levelness associated with adjacent frame sections 46, 48, 50 such that the levelness of the frame sections 46, 48, 50 relative to each other may be determined.

The sensor actuator 154 may correspond to any suitable actuation device that is configured to drive the tillage sensor 152 along the linear movement path 164. For instance, in a particular embodiment, the tillage sensor 152 is coupled to the support arm 156 by a rail system 162. One or more of the rails of the rail system 162 may be configured as a fixed rack configured to engage a corresponding pinion gear coupled to the sensor actuator 154. In such an embodiment, the sensor actuator 154 may correspond to a rotary actuator (e.g., an electric motor) configured to rotationally drive the pinion gear to linearly actuate the tillage sensor 152 along the linear movement path 164.

It should be appreciated that, in alternative embodiments, the tillage sensor 152 may be coupled to the support arm 156 by any other suitable means that allows the tillage sensor 152 to be actuated along the linear movement path 164. For instance, the tillage sensor 152 may be coupled to the support arm 156 by a track, a parallel linkage assembly, a pivoting arm, and/or the like. Furthermore, it should be appreciated that the sensor actuator 154 may correspond to any suitable actuator that is configured to actuate the tillage sensor 152 along an associated linear movement path 164. For instance, the sensor actuator 154 may be configured as a hydraulic cylinder, a pneumatic cylinder, a belt drive, a screw drive, and/or the like.

As shown in FIG. 5, the tillage sensor 152 may alternatively be supported on the implement 10 such that the tillage sensor 152 is pivotably actuatable relative to the support arm 156 and/or the adjacent portion of the implement 10. For example, the tillage sensor 152 may be coupled to the support arm 156 by a pivot bracket 166 such that the tillage sensor 152 is pivotable about a horizontal pivot axis 166A along an arced movement path 168 corresponding to a range of angular positions of the tillage sensor 152. In such an embodiment, the sensor actuator 154 may be configured to move the tillage sensor 152 back and forth along the arced movement path 168 as the implement 10 is moved across the field such that a field of view 152A of the tillage sensor 152 is oscillated across a larger portion of the width W1 of the implement/swath, allowing data to be captured along different sub-sections of the field swath being worked. In some embodiments, the arced movement path 168 is configured such that the tillage sensor 152 may generate data indicative of the tillage conditions of the tillage layers created by at least two of the frame sections 46, 48, 50 (FIG. 2). For instance, the tillage sensor 152 may be configured to generate data indicative of the tillage floor levelness associated with adjacent frame sections 46, 48, 50 such that the levelness of the frame sections 46, 48, 50 relative to each other may be determined.

In the embodiment shown, the sensor actuator 154 is a rotary actuator mounted to the pivot bracket 166 and configured to rotate the tillage sensor 152 along the arced movement path 168. However, it should be appreciated that, in alternative embodiments, the tillage sensor 152 may be coupled to the support arm 156 by any other suitable means that allows the tillage sensor 152 to be pivotably actuated along the arced movement path 168. For instance, the tillage sensor 152 may be coupled to the support arm 156 by a rackand-pinion system, a worm assembly, and/or the like. Furthermore, it should be appreciated that the sensor actuator 154 may correspond to any suitable actuator configured to actuate the tillage sensor 152 along the arced movement path 168. For instance, the sensor actuator 154 may be configured as a hydraulic cylinder, a pneumatic cylinder, a belt drive, a worm gear drive, and/or the like.

FIGS. 4 and 5 illustrate differing configurations for actuating the tillage sensor 152 across a linear movement path 164 and an arced movement path 168, respectively. However, it should be appreciated that, in other embodiments, the sensing assembly 150 may include an actuator, or a combination of actuators, configured to both linearly and pivotably actuate the tillage sensor 152 such that the tillage sensor 152 is movable along both a linear movement path and an arced movement path. It should further be appreciated that the sensor actuator 154 may be controlled by a controller of the disclosed system to actuate the sensor 152 along the sensor movement path 164, 168.

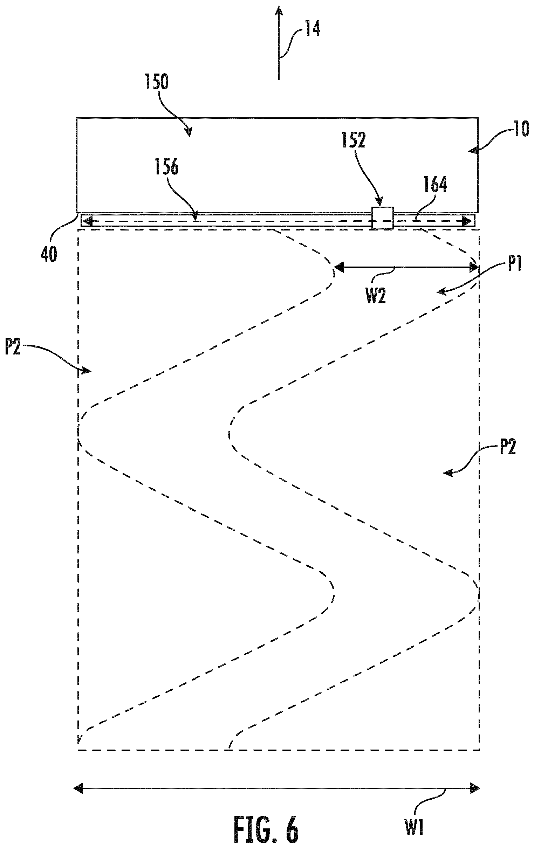

Referring now to FIG. 6, an example view of an aft end of the implement and an adjacent portion of a field are illustrated in accordance with aspects of the present subject matter. More particularly, FIG. 6 shows a portion of a field adjacent to an aft end 40 of the implement during operation of the sensing assembly 150 in which the tillage sensor 152 is configured to be actuated back and forth along the sensor movement path (e.g., the linear movement path 164) such that its field of view 152A is oscillated back and forth along the width W1 of the implement/swath while the implement 10 is moved across the field. In some embodiments, the tillage sensor 152 is continuously actuated back and forth along the linear sensor movement path 164 at a relatively constant speed. As such, the field of view 152A of the tillage sensor 152 may generally follow a sinusoidal path such that the tillage sensor 152 collects data corresponding to a sine-shaped first sub-portion P1 of the tillage layer associated with the swath. However, in other embodiments, the tillage sensor 152 may be actuated such that its field of view 152A follows any other shaped path. Further, in some embodiments, such as the embodiment shown, the tillage sensor 152 is actuated across the linear movement path 164 such that its field of view 152A is oscillated across the entire width W 1 of the implement/swath. It should be appreciated, however, that the tillage sensor 152 may be oscillated to cover any suitable portion of the width W 1 of the implement/swath.

The data generated by the tillage sensor 152 as the implement 10 is moved across the field may be used to better determine the tillage conditions across the width W 1 of the implement 10. For instance, as indicated above, the sensor 152 may be moved relative to the implement 10 such that the tillage conditions of a section of the tillage layer associated with a single frame section 46, 48, 50 (FIG. 2) or the tillage conditions across sections of the tillage layer associated with multiple frame sections 46, 48, 50 (FIG. 2) may be determined. As will be described below, such tillage conditions may be used to adjust the levelness of the associated frame section(s) 46, 48, 50 (FIG. 2) to improve the associated tillage condition.

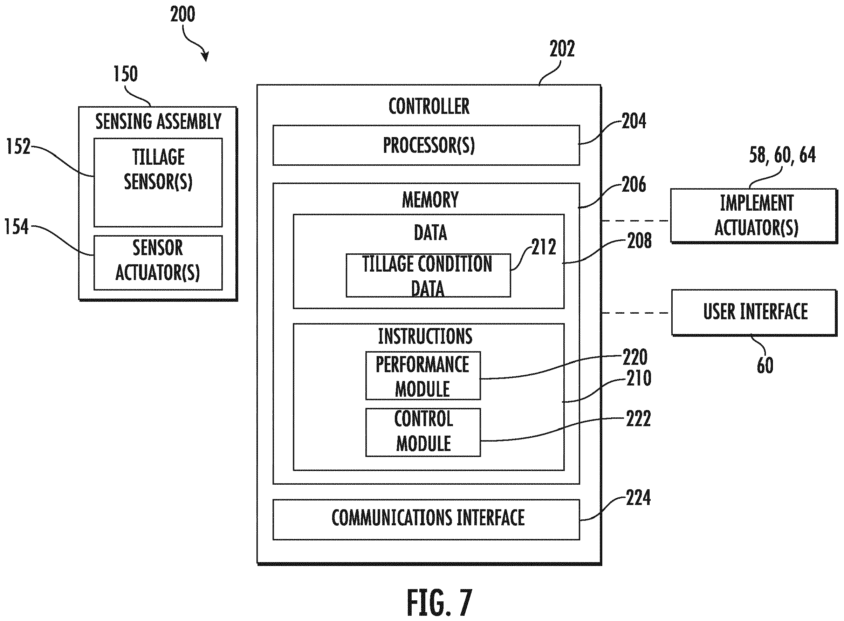

Referring now to FIG. 7, a schematic view of one embodiment of a system 200 for monitoring tillage conditions as an agricultural implement is moved across a field is illustrated in accordance with aspects of the present subject matter. In general, the system 200 will be described herein with reference to the implement 10 and the work vehicle 12 described above with reference to FIGS. 1-3, as well as the sensing assembly 150 described above with reference to FIGS. 3-6. However, it should be appreciated by those of ordinary skill in the art that the disclosed system 200 may generally be utilized with work vehicles having any suitable vehicle configuration, implements having any suitable implement configuration, and/or with sensing assemblies having any other suitable assembly configuration. Additionally, it should be appreciated that, for purposes of illustration, communicative links or electrical couplings of the system 200 shown in FIG. 7 are indicated by dashed lines.

In several embodiments, the system 200 may include a controller 202 and various other components configured to be communicatively coupled to and/or controlled by the controller 202, such as a sensing assembly (e.g., sensing assembly 150) having one or more sensors (e.g., sensor(s) 152) configured to capture tillage conditions of a tillage layer formed within a field and one or more actuators (e.g., sensor actuator(s) 154), a user interface (e.g., user interface 60), and/or various components of the implement 10 (e.g., implement actuator(s) 58, 60, 64). The user interface 60 described herein may include, without limitation, any combination of input and/or output devices that allow an operator to provide operator inputs to the controller 202 and/or that allow the controller 202 to provide feedback to the operator, such as a keyboard, keypad, pointing device, buttons, knobs, touch sensitive screen, mobile device, audio input device, audio output device, and/or the like.

In general, the controller 202 may correspond to any suitable processor-based device(s), such as a computing device or any combination of computing devices. Thus, as shown in FIG. 7, the controller 202 may generally include one or more processor(s) 204 and associated memory devices 206 configured to perform a variety of computerimplemented functions (e.g., performing the methods, steps, algorithms, calculations and the like disclosed herein). As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory 206 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory 206 may generally be configured to store information accessible to the processor(s) 204, including data 208 that can be retrieved, manipulated, created and/or stored by the processor(s) 204 and instructions 210 that can be executed by the processor(s) 204.

It should be appreciated that the controller 202 may correspond to an existing controller for the implement 10 or the vehicle 12 or may correspond to a separate processing device. For instance, in one embodiment, the controller 202 may form all or part of a separate plug-in module that may be installed in operative association with the implement 10 or the vehicle 12 to allow for the disclosed system and method to be implemented without requiring additional software to be uploaded onto existing control devices of the implement 10 or the vehicle 12.

In several embodiments, the data 208 may be stored in one or more databases. For example, the memory 206 may include a tillage condition database 212 for storing tillage condition data received from the sensor(s) 152. For instance, the sensor(s) 152 may be configured to continuously or periodically capture data associated with a portion of the field, such as immediately after the performance of an agricultural operation within such portion of the field. In such an embodiment, the data transmitted to the controller 202 from the sensor(s) 152 may be stored within the tillage condition database 212 for subsequent processing and/or analysis. It should be appreciated that, as used herein, the term tillage condition data 212 may include any suitable type of data received from the sensor(s) 152 that allows for the tillage conditions of a field to be analyzed, including RADAR data, and/or other image-related data (e.g., scan data and/or the like).

In some embodiments, the instructions 210 stored within the memory 206 of the controller 202 may be executed by the processor(s) 204 to implement a performance module 220. In general, the performance module 220 may be configured to assess the tillage condition data 212 deriving from the sensor(s) 152 to determine a performance of the implement 10 in forming the tillage layer. For instance, as indicated above, in one embodiment, data may be captured corresponding to multiple ground engaging tools (e.g., shanks 44) across a single frame section 46, 48, 50 or across multiple frame sections 46, 48, 50 to ascertain the uniformity of the tillage conditions across the frame section(s) 46, 48, 50. In such embodiment, the performance module 220 may be configured to compare the tillage conditions for the different ground engaging tools to determine a tillage condition differential for the analyzed portion of the tillage layer, which can then be used to assess the performance of the implement 10. It should be appreciated that the controller 202 may use any suitable analyzing technique for tillage condition data 212. For instance, in some embodiments, the controller 202 may be configured to use any suitable machine learning technique to improve the efficiency and/or accuracy of determining the tillage conditions.

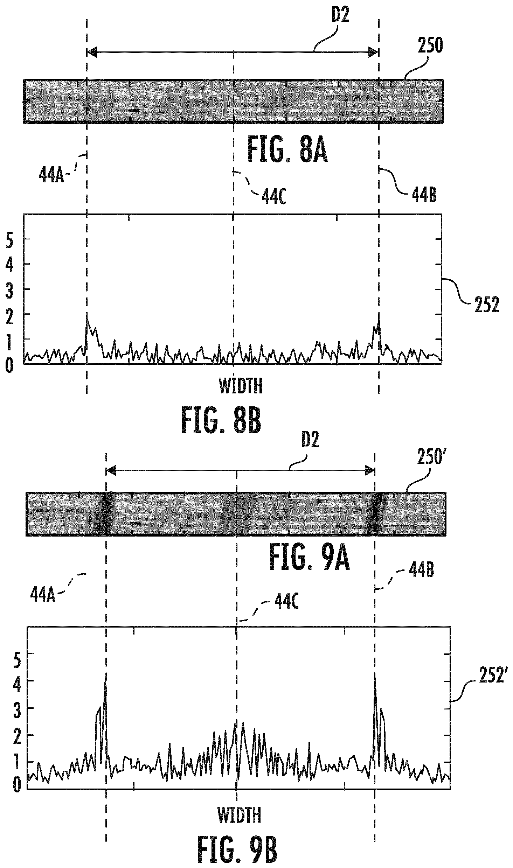

Referring to FIGS. 8A-9B, example embodiments of tillage condition data that may be stored within the tillage condition database 212 and/or analyzed by the performance module 220 are illustrated in accordance with aspects of the present subject matter. In particular, FIG. 8A illustrates an example of a depth map generated from data collected by the sensor(s) 152, particularly corresponding to data associated with an acceptable tillage floor profile. FIG. 8B illustrates an example of a Fourier intensity chart corresponding to the depth map of FIG. 8A. FIG. 9A illustrates an example of a depth map generated from data collected by the sensor(s) 152, particularly corresponding to data associated with an undesirable tillage floor profile. Additionally, FIG. 9B illustrates an example of a Fourier intensity chart corresponding to the depth map of FIG. 9A.

As shown in FIGS. 8A-9B, the depth maps 250, 250' and Fourier intensity charts 252, 252' may be representations of the data generated by the sensor(s) 152 and stored within the tillage condition database 212 and/or displayed to an operator (e.g., on the user interface 60). The depth maps 250, 250' illustrate the varying depths of a portion of the tillage floor formed by first, second, and third ground engaging tools 44A, 44B, 44C of the implement 10 with a grayscale gradient. The darkest areas of the depth maps 250, 250' correspond to deeper tillage floor locations and lighter areas conversely correspond to shallower tillage floor locations. Similarly, the Fourier intensity charts 252, 252' indicate the varying depths of the tillage floor for each position along the width of the portion of the tillage layer. In one embodiment, the first ground engaging tool 44A and the second ground engaging tool 44B are spaced apart by a distance D2 in the lateral direction 30 of the implement 10, with the third ground engaging tool 44C being positioned between the first and second ground engaging tools along the lateral direction 30 and spaced apart from the first and second ground engaging tools along the longitudinal direction 36. Using the lateral spacing between the tools 44A, 44B, 44C, the relative tillage floor levelness associated with the tools 44A, 44B, 44C may be determined.

In general, a smooth or level tillage floor is desired such that a depth map or Fourier intensity chart indicating the different depths across the tillage floor of the tillage layer should have a uniform appearance with little variation. For instance, the depth map 250 illustrated in FIG. 8A has generally uniform shading. Similarly, as shown in FIG. 8B, the Fourier intensity chart 252 represents a tillage floor with little overall variation in depth, with only slightly more variation corresponding to the spacing D2 between the first and second ground engaging tools 44A, 44B. As such, the performance module 220 may initially determine that the tillage floor associated with the ground engaging tools 44A, 44B, 44C is uniform and that the ground engaging tools 44A, 44B, 44C are level relative to each other based on an analysis of the data associated with the depth map 250 and/or Fourier intensity chart 252. In contrast, the depth map 250' illustrated in FIG. 9A has a non-uniform appearance that has stripes representing deeper depths or ridges associated with the portions of the tillage floor at the ground engaging tools 44. Similarly, the Fourier intensity chart 252' shown in FIG. 9B indicates a tillage layer with a unlevel tillage floor having large variation components corresponding to the spacing between the first and second ground engaging tools 44A, 44B and a smaller variation component corresponding to the third ground engaging tool 44C. As such, the performance module 220 may initially determine that the tillage floor associated with the ground engaging tools 44A, 44B, 44C is not uniform and that the ground engaging tools 44A, 44B, 44C are not level relative to each other based on an analysis of the data associated with the depth map 250' and/or the Fourier intensity chart 252'. In particular, the performance module 220 may determine that the first and second ground engaging tools 44A, 44B are deeper than the third ground engaging tool 44C, and that the associated frame section(s) 46, 48, 50 need to be leveled along the longitudinal direction 36.

Referring back to FIG. 7, in some embodiments, the instructions 210 stored within the memory 206 of the controller 202 may be executed by the processor(s) 204 to implement a control module 222. The control module 222 may generally be configured to perform a control action based on the monitored tillage conditions. The control action, in one embodiment, includes adjusting the operation of one or more components of the implement 10, such as adjusting the operation of one or more of the actuators 58, 60, 64 to level the frame section(s) 46, 48, 50 based on the monitored tillage conditions to improve the tillage conditions. In some embodiments, the control action may include controlling the operation of the sensor actuator(s) 154 to actuate the ground penetrating sensor 152 along the sensor movement path. Moreover, in some embodiments, the control action may include controlling the operation of the user interface 60 to notify an operator of the tillage conditions, performance efficiency of the implement 10, and/or the like. Additionally, or alternatively, in some embodiments, the control action may include adjusting the operation of the implement 10 based on an input from an operator, e.g., via the user interface 60.

Moreover, as shown in FIG. 7, the controller 202 may also include a communications interface 224 to provide a means for the controller 202 to communicate with any of the various other system components described herein. For instance, one or more communicative links or interfaces (e.g., one or more data buses) may be provided between the communications interface 224 and the sensor(s) 152 to allow data transmitted from the sensor(s) 152 to be received by the controller 202. Similarly, one or more communicative links or interfaces (e.g., one or more data buses) may be provided between the communications interface 224 and the user interface 60 to allow operator inputs to be received by the controller 202 and to allow the controller 202 to control the operation of one or more components of the user interface 60 to present one or more indicators of the tillage condition(s) to the operator.

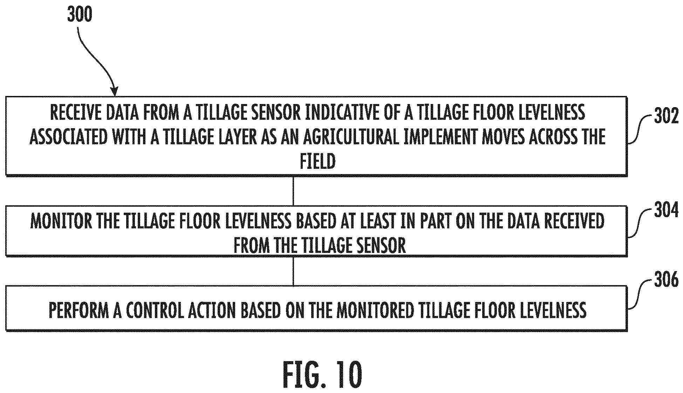

Referring now to FIG. 10, a flow diagram of one embodiment of a method 300 for monitoring tillage conditions as an agricultural operation is performed within a field is illustrated in accordance with aspects of the present subject matter. In general, the method 300 will be described herein with reference to the implement 10 and the work vehicle 12 shown in FIGS. 1-3, as well as the sensing assembly 150 shown in FIGS. 3-7 and the various system components shown in FIG. 8. However, it should be appreciated that the disclosed method 300 may be implemented with work vehicles and/or implements having any other suitable configurations, with sensing assemblies having any other suitable configurations, and/or within systems having any other suitable system configuration. In addition, although FIG. 10 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 10, at (302), the method 300 may include receiving data from a tillage sensor indicative of a tillage floor levelness associated with a tillage layer of a field as an agricultural implement moves across the field. For instance, as indicated above, the controller 202 may be configured to receive data from a tillage sensor 152 indicative of a tillage floor levelness of a tillage layer of a field as the implement 10 moves across the field, where the tillage floor is positioned vertically below the surface of the field FS.

Further, at (304), the method 300 may include monitoring the tillage floor levelness based at least in part on the data received from the tillage sensor. For example, as described above, the controller 202 may monitor the levelness of the tillage floor associated with the portions of the tillage layer within the field of view 152A of the tillage sensor 152 based on assessment or analysis of the data received from the sensor 152. For instance, the controller 202 may be configured to monitor the variation in the tillage floor levelness based on the depth map(s) and/or the Fourier intensity chart(s), particularly across the portions corresponding to the ground engaging tools (e.g., shanks 44).

Additionally, at (306), the method 300 may include performing a control action based on the monitored tillage floor levelness. For instance, as described above, the control action may include automatically controlling one or more components of the implement 10 (e.g., by controlling one or more of the actuators 58, 60, 64) to adjust the operation of the implement 10 in a manner that changes the monitored tillage floor levelness, notifying an operator of the present tillage floor levelness and/or other tillage conditions, and/or controlling one or more components of the implement 10 (e.g., by controlling one or more of the actuators 58, 60, 64) based on an input received from an operator (e.g., via the user interface) in response to the notified tillage conditions.

It is to be understood that, in several embodiments, the steps of the method 300 are performed by the controller 202 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, in several embodiments, any of the functionality performed by the controller 202 described herein, such as the method 300, are implemented in software code or instructions which are tangibly stored on a tangible computer readable medium. The controller 202 loads the software code or instructions via a direct interface with the computer readable medium or via a wired and/or wireless network. Upon loading and executing such software code or instructions by the controller 202, the controller 202 may perform any of the functionality of the controller 202 described herein, including any steps of the method 300 described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A system (200) for monitoring tillage conditions of a field, the system (200) comprising an agricultural implement (10), the system (200) being **characterized by**:
a tillage sensor (152) supported on the agricultural implement (10) such that the tillage sensor (152) has a field of view (152A) directed towards a portion of the field disposed relative to the agricultural implement (10), the tillage sensor (152) being configured to generate data indicative of a tillage floor levelness associated with a tillage floor (TF) of a tillage layer (TL) of the field, the tillage floor (TF) being disposed below a surface of the field (FS); and
a controller (202) configured to:
receive the data from the tillage sensor (152) indicative of the tillage floor levelness as the agricultural implement (10) moves across the field; and
monitor the tillage floor levelness based at least in part on the data received from the tillage sensor (152)

2. The system (200) as in claim 1, further comprising an implement actuator (58, 60, 64) configured to adjust an operation of one or more components of the agricultural implement (10),
wherein the controller (202) is further configured to control the implement actuator (58, 60, 64) to adjust the operation of the one or more components of the agricultural implement (10) based on the monitored tillage floor levelness.

3. The system (200) as in any preceding claim, further comprising a sensor actuator (154) configured to actuate the tillage sensor (152) relative to an adjacent portion of the agricultural implement (10) along a sensor movement path (164, 168).

4. The system (200) as in claim 3, wherein the controller (202) is configured to control the sensor actuator (154) to actuate the tillage sensor (152) back and forth along the sensor movement path (164, 168) as the agricultural implement (10) moves across the field.

5. The system (200) as in any preceding claim, wherein the tillage sensor (152) generates a polarized field within the field of view (152A), the polarized field having a field direction (FD) oriented at an angle (A1) relative to a direction of travel (14) of the agricultural implement (10).

6. The system (200) as in claim 5, wherein the field direction (FD) is perpendicular relative to the direction of travel (14) of the agricultural implement (10).

7. The system (200) as in any preceding claim, wherein the tillage sensor (152) comprises a ground penetrating radar.

8. A method for monitoring tillage conditions of a field, the method being **characterized by**:
receiving, with a computing device (202), data from a tillage sensor (152) supported on an agricultural implement (10) such that the tillage sensor (152) has a field of view (152A) directed towards a portion of the field disposed relative to the agricultural implement (10), wherein the sensor is indicative of a tillage floor levelness associated with a tillage floor (TF) of a tillage layer (TL) of said field as the agricultural implement (10) moves across the field, the tillage floor (TF) being disposed below a surface of the field (FS);
monitoring, with the computing device (202), the tillage floor levelness based at least in part on the data received from the tillage sensor (152); and
performing, with the computing device (202), a control action based on the monitored tillage floor levelness.

9. The method as in claim 8, further comprising controlling, with the computing device (202), a sensor actuator (154) to actuate the tillage sensor (152) relative to an adjacent portion of the agricultural implement (10) along a sensor movement path (164, 168).

10. The method as in claim 9, wherein controlling the sensor actuator (154) to actuate the tillage sensor (152) comprises controlling the sensor actuator (154) to actuate the tillage sensor (152) back and forth along the sensor movement path (164, 168) as the agricultural implement (10) moves across the field.

11. The method as in claim 8, wherein performing the control action comprises controlling an implement actuator (58, 60, 64) to adjust an operation of one or more components of the agricultural implement (10) based on the monitored tillage floor levelness.

12. The method as in claim 8, wherein performing the control action comprises controlling a user interface (60) to indicate to an operator the tillage floor levelness.

13. The method as in claim 12, wherein performing the control action further comprises:
receiving an input via the user interface (60) indicative of adjusting an operation of one or more components of the agricultural implement (10); and
adjusting the operation of the one or more components of the agricultural implement (10) based on the received input.

14. The method as in claim 8, whereinthe tillage sensor (152) is generating a polarized field within the field of view (152A), the polarized field having a field direction (FD) oriented at an angle (A1) relative to a direction of travel (14) of the agricultural implement (10).

15. The method as in claim 8, wherein the tillage sensor (152) comprises a ground penetrating radar.

## Patentansprüche

1. System (200) zur Überwachung der Bodenbearbeitungsbedingungen eines Feldes, wobei das System (200) ein landwirtschaftliches Arbeitsgerät (10) aufweist, wobei das System (200) **gekennzeichnet ist durch**
einen Bodenbearbeitungssensor (152), der an dem landwirtschaftlichen Arbeitsgerät (10) derart gehalten ist, dass der Bodenbearbeitungssensor (152) ein effektives Messfeld (152A) hat, das auf einen Abschnitt des Feldes gerichtet ist, der relativ zu dem landwirtschaftlichen Arbeitsgerät (10) angeordnet ist, wobei der Bodenbearbeitungssensor (152) dazu eingerichtet ist, Daten zu erzeugen, die charakteristisch sind für die Bodenebenheit, die einem zu bearbeitenden Boden (TF) einer Bodenbearbeitungsschicht (TL) eines Feldes zugeordnet ist, wobei sich der zu bearbeitende Boden (TF) unter einer Oberfläche des Feldes (FS) befindet; und
eine Steuerung (202), die dazu eingerichtet ist:
Daten von dem Bodenbearbeitungssensor (152) zu erhalten, die charakteristisch sind für die Bodenebenheit, wenn sich das landwirtschaftliche Arbeitsgerät (10) über das Feld bewegt; und
die Bodenebenheit zumindest teilweise auf Basis von Daten zu überwachen, die von dem Bodenbearbeitungssensor (152) erhalten werden.

2. System (200) nach Anspruch 1, weiterhin aufweisend eine Arbeitsgerät-Betätigungseinrichtung (58, 60, 64), die dazu eingerichtet ist, einen Betrieb einer oder mehrerer Komponenten des landwirtschaftlichen Arbeitsgeräts (10) einzustellen, wobei die Steuerung (202) weiterhin dazu eingerichtet ist, die Arbeitsgerät-Betätigungseinrichtung (58, 60, 64) zu steuern, um einen Betrieb einer oder mehrerer Komponenten des landwirtschaftlichen Arbeitsgeräts (10) auf Basis der überwachten Bodenebenheit einzustellen.

3. System (200) nach einem der vorhergehenden Ansprüche, weiterhin aufweisend eine Sensor-Betätigungseinrichtung (154), die dazu eingerichtet ist, den Bodenbearbeitungssensor (152) relativ zu einem benachbarten Abschnitt des landwirtschaftlichen Arbeitsgeräts (10) entlang einer Sensor-Bewegungsbahn (164, 168) zu betätigen.

4. System (200) nach Anspruch 3, wobei die Steuerung (202) dazu eingerichtet ist, die Sensor-Betätigungseinrichtung (154) zu steuern, um den Bodenbearbeitungssensor (152) entlang der Sensor-Bewegungsbahn (164, 168) hin und her zu bewegen, wenn sich das landwirtschaftliche Arbeitsgerät (10) über das Feld bewegt.

5. System (200) nach einem der vorhergehenden Ansprüche, wobei der Bodenbearbeitungssensor (152) ein polarisiertes Feld in dem effektiven Messfeld (152A) erzeugt, wobei das polarisierte Feld eine Feldrichtung (FD) hat, die in einem Winkel (A1) relativ zu einer Bewegungsrichtung (14) des landwirtschaftlichen Arbeitsgeräts (10) ausgerichtet ist.

6. System (200) nach Anspruch 5, wobei die Feldrichtung (FD) senkrecht relativ zur Bewegungsrichtung (14) des landwirtschaftlichen Arbeitsgeräts (10) ist.

7. System (200) nach einem der vorhergehenden Ansprüche, wobei der Bodenbearbeitungssensor (152) ein Bodenradar aufweist.

8. Verfahren zur Überwachung von Bodenbearbeitungsbedingungen eines Feldes, wobei das Verfahren **gekennzeichnet ist durch** folgende Schritte:
Erhalten, mit einer Computereinrichtung (202), von Daten von einem Bodenbearbeitungssensor (152), der an einem landwirtschaftlichen Arbeitsgerät (10) derart gehalten ist, dass der Bodenbearbeitungssensor (152) ein effektives Messfeld (152A) hat, das auf einen Abschnitt des Feldes gerichtet ist, der relativ zu dem landwirtschaftlichen Arbeitsgerät (10) angeordnet ist, wobei der Bodenbearbeitungssensor (152) charakteristisch ist für die Bodenebenheit, die einem zu bearbeitenden Boden (TF) einer Bodenbearbeitungsschicht (TL) des Feldes zugeordnet ist, wenn sich das landwirtschaftliche Arbeitsgerät (10) über das Feld bewegt, wobei sich der zu bearbeitende Boden (TF) unter einer Oberfläche des Feldes (FS) befindet;
Überwachen, mit der Computereinrichtung (202), der Bodenebenheit zumindest teilweise auf Basis der Daten, die von dem Bodenbearbeitungssensor (152) erhalten werden; und
Durchführen, mit der Computereinrichtung (202), eines Steuervorgangs auf Basis der überwachten Bodenebenheit.

9. Verfahren nach Anspruch 8, weiterhin aufweisend das Steuern, mit der Computereinrichtung (202), einer Sensor-Betätigungseinrichtung (154), um den Bodenbearbeitungssensor (152) relativ zu einem benachbarten Abschnitt des landwirtschaftlichen Arbeitsgeräts (10) entlang einer Sensor-Bewegungsbahn (164, 168) zu betätigen.

10. Verfahren nach Anspruch 9, wobei das Steuern der Sensorbetätigungseinrichtung (154), um den Bodenbearbeitungssensor (152) zu betätigen, das Steuern der Sensorbetätigungseinrichtung (154) umfasst, um den Bodenbearbeitungssensor (152) entlang der Sensor-Bewegungsbahn (164, 168) hin und her zu bewegen, wenn sich das landwirtschaftliche Arbeitsgerät (10) über das Feld bewegt.

11. Verfahren nach Anspruch 8, wobei die Durchführung des Steuervorgangs die Steuerung einer Arbeitsgerät-Betätigungseinrichtung (58, 60, 64) umfasst, um einen Betrieb einer oder mehrerer Komponenten des landwirtschaftlichen Arbeitsgeräts (10) auf Basis der überwachten Bodenebenheit einzustellen.

12. Verfahren nach Anspruch 8, wobei die Durchführung des Steuervorgangs die Steuerung einer Benutzerschnittstelle (60) umfasst, um einem Bediener die Bodenebenheit anzuzeigen.

13. Verfahren nach Anspruch 12, wobei die Durchführung des Steuervorgangs weiterhin umfasst:
Erhalten einer Eingabe über die Benutzerschnittstelle (60), die charakteristisch ist für das Einstellen eines Betriebs einer oder mehrerer Komponenten des landwirtschaftlichen Arbeitsgeräts (10); und
Einstellen des Betriebs einer oder mehrerer Komponenten des landwirtschaftlichen Arbeitsgeräts (10) auf Basis der erhaltenen Eingabe.

14. Verfahren nach Anspruch 8, wobei der Bodenbearbeitungssensor (152) ein polarisiertes Feld in dem effektiven Messfeld (152A) erzeugt, wobei das polarisierte Feld eine Feldrichtung (FD) hat, die in einem Winkel (A1) relativ zu einer Bewegungsrichtung (14) des landwirtschaftlichen Arbeitsgeräts (10) ausgerichtet ist.

15. Verfahren nach Anspruch 8, wobei der Bodenbearbeitungssensor (152) ein Bodenradar aufweist.

## Revendications

1. Système (200) de surveillance des conditions de labourage dans un champ, le système (200) comprenant un outil agricole (10), le système (200) étant **caractérisé par** :
un capteur de labourage (152) supporté par l'outil agricole (10) de sorte que le capteur de labourage (152) a un champ de vision (152A) dirigé vers une partie du champ disposé par rapport à l'outil agricole (10), le capteur de labourage (152) étant configuré pour générer des données indicatives d'un niveau de sol de labourage associé à un sol de labourage (TF) d'une couche de labourage (TL) du champ, le sol de labourage (TF) étant disposé en dessous d'une surface du champ (FS) ; et
un dispositif de commande (202) configuré pour :
recevoir les données du capteur de labourage (152) indiquant le niveau de sol de labourage à mesure que l'outil agricole (10) se déplace dans le champ ; et
surveiller le niveau de sol de labourage en se basant au moins en partie sur les données reçues du capteur de labourage (152).

2. Système (200) selon la revendication 1, comprenant en outre un actionneur d'outil (58, 60, 64) configuré pour régler le fonctionnement d'un ou de plusieurs composants de l'outil agricole (10),
dans lequel le dispositif de commande (202) est en outre configuré pour commander l'actionneur de l'outil (58, 60, 64) afin de régler le fonctionnement d'un ou de plusieurs composants de l'outil agricole (10) en fonction du niveau de sol de labourage surveillé.

3. Système (200) selon l'une quelconque des revendications précédentes, comprenant en outre un actionneur de capteur (154) configuré pour actionner le capteur de labourage (152) par rapport à une partie adjacente de l'outil agricole (10) le long d'une trajectoire de déplacement du capteur (164, 168).

4. Système (200) selon la revendication 3, dans lequel le dispositif de commande (202) est configuré pour commander l'actionneur de capteur (154) afin d'actionner le capteur de labourage (152) dans un mouvement de va-et-vient le long de la trajectoire de déplacement du capteur (164, 168) lorsque l'outil agricole (10) se déplace dans le champ.

5. Système (200) selon l'une quelconque des revendications précédentes, dans lequel le capteur de labourage (152) génère un champ polarisé dans le champ de vision (152A), le champ polarisé ayant une direction de champ (FD) orientée à un angle (Al) par rapport à une direction de déplacement (14) de l'outil agricole (10).

6. Système (200) selon la revendication 5, dans lequel la direction du champ (FD) est perpendiculaire à la direction de déplacement (14) de l'outil agricole (10).

7. Système (200) selon l'une quelconque des revendications précédentes, dans lequel le capteur de labourage (152) comprend un radar pénétrant le sol.

8. Procédé pour surveiller les conditions de labourage dans un champ, le procédé étant **caractérisé par** les étapes consistant à :
recevoir, à l'aide d'un dispositif informatique, des données d'un capteur de labourage (152) supporté par l'outil agricole (10) de sorte que le capteur de labourage (152) a un champ de vision (152A) dirigé vers une partie du champ disposé par rapport à l'outil agricole (10), dans lequel le capteur indique un niveau de sol de labourage associé à un sol de labourage (TF) d'une couche de labourage (TL) dudit champ à mesure que l'outil agricole (10) se déplace dans le champ, le sol de labourage (TF) étant situé en dessous d'une surface du champ (FS) ;
surveiller, à l'aide du dispositif informatique (202), le niveau de sol de labourage en se basant au moins en partie sur les données reçues du capteur de labourage (152) ; et
exécuter, à l'aide du dispositif informatique (202), une action de commande basée sur le niveau de sol de labourage surveillé.

9. Procédé selon la revendication 8, comprenant en outre la commande, à l'aide du dispositif informatique (202), d'un actionneur de capteur (154) pour actionner le capteur de labourage (152) par rapport à une partie adjacente de l'outil agricole (10) le long d'une trajectoire de déplacement du capteur (164, 168).

10. Procédé selon la revendication 9, dans lequel la commande de l' actionneur de capteur (154) pour actionner le capteur de labourage (152) comprend la commande de l'actionneur de capteur (154) pour actionner le capteur de labourage (152) dans un mouvement de va-et-vient le long de la trajectoire de déplacement du capteur (164, 168) lorsque l'outil agricole (10) se déplace dans le champ.

11. Procédé selon la revendication 8, dans lequel l'exécution de l'action de commande consiste à commander un actionneur d'outil (58, 60, 64) pour régler le fonctionnement d'un ou de plusieurs composants de l'outil agricole (10) en fonction du niveau de sol de labourage surveillé.

12. Procédé selon la revendication 8, dans lequel l'exécution de l'action de commande consiste à commander une interface utilisateur (60) pour indiquer à un opérateur le niveau de sol de labourage.

13. Procédé selon la revendication 12, dans lequel l'exécution de l'action de commande comprend en outre les étapes consistant à :
recevoir une entrée via l'interface utilisateur (60) indiquant le réglage d'un fonctionnement d'un ou de plusieurs composants de l'outil agricole (10) ; et
régler le fonctionnement d'un ou de plusieurs composants de l'outil agricole (10) sur la base des données reçues.

14. Procédé selon la revendication 8, dans lequel le capteur de labourage (152) génère un champ polarisé dans le champ de vision (152A), le champ polarisé ayant une direction de champ (FD) orientée à un angle (Al) par rapport à la direction de déplacement (14) de l'outil agricole (10).

15. Procédé selon la revendication 8, dans lequel le capteur de labourage (152) comprend un radar pénétrant le sol.
